# EUROPEAN PATENT SPECIFICATION

(11) **EP 1 668 069 B1**
(45) Date of publication and mention of the grant of the patent: **03.10.2007**
(21) Application number: 04784474.1
(22) Date of filing: 20.09.2004
(51) Int. Cl.: C08K 3/34, C08K 5/09, C08L 69/00

(54) **POLYCARBONATE COMPOSITION**
POLYCARBONATZUSAMMENSETZUNG
COMPOSITION DE POLYCARBONATE

(30) Priority: 22.09.2003 US 667955
(43) Date of publication of application: 14.06.2006
(73) Proprietor: Bayer MaterialScience LLC, Pittsburgh, PA 15205-9741 (US)
(72) Inventor: CHUNG, James, Y.J., Wexford, PA 15090 (US); PAUL, Winfried, G., Pittsburgh, PA 15205 (US)
(74) Representative: Klimiuk, Meike
(86) International application number: PCT/US2004/030621
(87) International publication number: WO 2005/030851

(56) References cited:
- US-B1- 6 423 767
- PATENT ABSTRACTS OF JAPAN vol. 2000, no. 11, 3 January 2001 (2001-01-03) -& JP 2000 212294 A (TORAY IND INC), 2 August 2000 (2000-08-02)
- SEVERE G ET AL: "EFFECT OF LAYERED SILICATES ON THERMAL CHARACTERISTICS OF POLYCARBONATE NANOCOMPOSITES" RAPRA ABSTRACTS, PERGAMON PRESS LTD. OXFORD, GB, vol. 38, no. 3, March 2001 (2001-03), page 233, XP001053947 ISSN: 0033-6750
- STN HCAPLUS, vol. 6, no. 115, 12 August 1991 (1991-08-12), XP002095815

## Description

### FIELD OF THE INVENTION

The invention concerns thermoplastic molding compositions and more particularly, reinforced polycarbonate compositions.

### SUMMARY OF THE INVENTION

A reinforced thermoplastic molding composition is disclosed. The composition contains polycarbonate resin, nanoclay in an amount of 0.1 to 20 percent relative to the weight of the polycarbonate and carboxylic acid in an amount of 1 to 20 percent relative to the weight of the nanoclay. The composition is characterized by its improved thermal stability and impact strength.

### BACKGROUND OF THE INVENTION

Polycarbonate resins are well known and have long been used for a variety of applications because of their characteristic combination of good mechanical and physical properties. However, their stiffness (flexural modulus) is inadequate for certain structural applications such as housings for power tools. Glass fibers incorporated in polycarbonate have largely addressed this shortcoming yet have adversely effected the appearance of the molded parts.

Nanoclays, clays having particle size smaller than 100 nm, are commercially available. Their utility in polymeric matrices have been widely disclosed in the literature, e.g., J. Materials Res., 1993, Volume 8, page 1179; J. Polym. Sci., Part A: Polym. Chem., 1993, volume 31, page 2493. Nanocomposites are a class of materials which feature a phase having particle dimensions in the range 1 to 100 nm. The art has now recognized that the inclusion of these materials in polymeric matrices result in composites having better mechanical properties than do their counterparts that include micro- and macro- sized particles.

Among the presently relevant literature, mention may be made of the inclusion of C₁₆- and C₁₈-tributyl phosphonium exchanged montmorillonite in polycarbonate; Geralda Severe, Alex J. Hsieh and Bryan E. Koene, Society of Plastics Engineers, ANTEC 2000, page 1523. This disclosure included a reporting of the resulting degradation of the impact strength of the polycarbonate.

The art also recognizes that swelling agents, such as long-chain organic cations, and water-soluble oligomers or polymers can be intercalated or absorbed between adjacent layers of clay, and thus increase the interlayer spacing. U.S. Patent 5,552,469 and WO 93/04117 among others, disclosed methods for treating relevant silicates resulting in imparting greater mechanical reinforcement to polymeric matrices in which they are incorporated.

U.S. Patent 5,760,121 disclosed nanocomposites that contain a matrix polymer and exfoliated intercalates formed by contacting a phyllosilicate with a polymer to adsorb or intercalate the polymer between adjacent phyllosilicate platelets. Sufficient polymer is adsorbed between adjacent phyllosilicate platelets to expand the adjacent platelets to a spacing of 5 to 100 angstroms so that the intercalate easily can be exfoliated by mixing it with an organic solvent or a polymer melt. Also relevant are the disclosures in U.S. Patents 5,747,560 and 5,385,776.

### DETAILED DESCRIPTION OF THE INVENTION

Suitable polycarbonate resins for preparing the copolymer of the present invention are homopolycarbonates and copolycarbonates and mixtures thereof.

The polycarbonates generally have a weight average molecular weight of 10,000 to 200,000, preferably 20,000 to 80,000 and their melt flow rate, per ASTM D-1238 at 300°C, is about 1 to about 65 g/10 min., preferably about 2 to 24 g/10 min. They may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph by H. Schnell, "Chemistry and Physics of Polycarbonates", Interscience Publishers, New York, New York, 1964).

In the present context, dihydroxy compounds suitable for the preparation of the polycarbonates of the invention conform to the structural formulae (1) or (2). 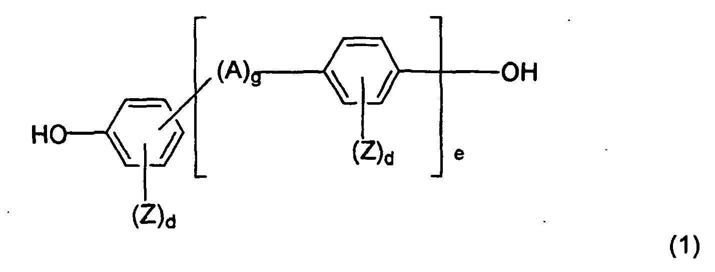 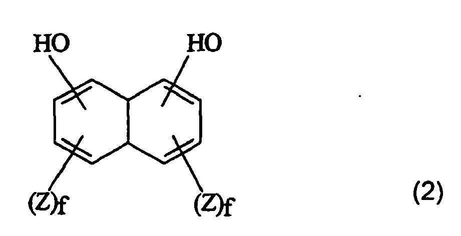 wherein
- A: denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂ or a radical conforming to 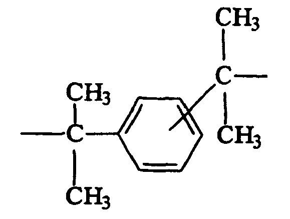
- e and g: both denote the number 0 to 1;
- Z: denotes F, Cl, Br or C₁-C₄-alkyl and if several Z radicals are substituents in one aryl radical, they may be identical or different from one another;
- d: denotes an integer from 0 to 4; and
- f: denotes an integer from 0 to 3.

Among the dihydroxy compounds useful in the practice of the invention are hydroquinone, resorcinol, bis-(hydroxyphenyl)-alkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones, dihydroxydiphenyl cycloalkanes, and α,α-bis-(hydroxyphenyl)-diisopropyl-benzenes, as well as their nuclear-alkylated compounds. These and further suitable aromatic dihydroxy compounds are described, for example, in U.S. Patents 5,227,458; 5,105,004; 5,126,428; 5,109,076; 5,104,723; 5,086,157; 3,028,356; 2,999,835; 3,148,172; 2,991,273; 3,271,367; and 2,999,846. Further examples of suitable bisphenols are 2,2-bis-(4-hydroxy-phenyl)-propane (bisphenol A), 2,4-bis-(4-hydroxyphenyl)-2-methyl-butane, 1,1-bis-(4-hydroxyphenyl)-cyclohexane, α,α'-bis-(4-hydroxy-phenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxy-phenyl)-sulfoxide, bis-(3,5-dimethyl-4-hydroxyphenyl)-sulfone, dihydroxybenzophenone, 2,4-bis-(3,5-dimethyl-4-hydroxyphenyl)-cyclohexane, α,α'-bis-(3,5-dimethyl-4-hydroxyphenyl)-p-diisopropylbenzene, 4,4'-sulfonyl diphenol and 4,4'-dihydroxydiphenyl.

Examples of particularly preferred aromatic bisphenols are 2,2,-bis-(4-hydroxyphenyl)-propane; 2,2-bis-(3,5-dimethyl-4-hydroxyphenyl)-propane; 1,1-bis-(4-hydroxyphenyl)-cyclohexane and 1,1-bis-(4-hydroxyphenyl)-3,3,5-trimethylcyclohexane.

The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention is phenolphthalein-based polycarbonate, copolycarbonates and terpolycarbonates such as are described in U.S. Patents 3,036,036 and 4,210,741.

The polycarbonates of the invention may also be branched by condensing therein small quantities, e.g., 0.05 to 2.0 mol % (relative to the bisphenols) of polyhydroxy compounds.

Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxy compounds which may be used for this purpose: phloroglucinol; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methylphenol; 2,4-dihydroxybenzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxy-benzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polycarbonates of the invention are polycondensation in a homogeneous phase and transesterification. The suitable processes are disclosed in U.S. Patents 3,028,365; 2,999,846; 3,153,008; and 2,991,273.

The preferred process for the preparation of polycarbonates is the interfacial polycondensation process.

Other methods of synthesis in forming the polycarbonates of the invention, such as disclosed in U.S. Patent 3,912,688 may be used.

Suitable polycarbonate resins are available in commerce, for instance, Makrolon FCR, Makrolon 2600, Makrolon 2800 and Makrolon 3100, all of which are bisphenol based homopolycarbonate resins differing in terms of their respective molecular weights and characterized in that their melt flow indices (MFR) per ASTM D-1238 are about 16.5 to 24, 13 to 16, 7.5 to 13.0 and 3.5 to 6.5 g/10 min., respectively. These are products of Bayer Polymers LLC of Pittsburgh, Pennsylvania.

A polycarbonate resin suitable in the practice of the invention is known and its structure and methods of preparation have been disclosed, for example, in U.S. Patents 3,030,331; 3,169,121; 3,395,119; 3,729,447; 4,255,556; 4,260;731; 4,369,303; 4,714,746; 5,470,938; 5,532,324 and 5,401,826.

Nanoclays are known and have been described in U.S. Patent 5,747,560. The clay has an average platelet thickness ranging from 1 nm to 100 nm, and an average length and average width each ranging from 50 nm to 700 nm.

The nanoclays in the context of the present invention are natural montmorilloonite modified with specific quarternary ammonium salts and quaternary phosphonium salts. Such quarternary ammonium salts modified clays are commercially available from Southern Clay Products under Cloistite®. Most preferred nanoclays are Cloistite 20A and Cloistite 25A. Cloistite 20A is a natural montmorillonite modified with a quarternary ammonium salt of dimethyl, dihydrogenated tallow with a chloride as a counter anion. Cloisite 25A is a natural montmorillonite modified with a quaternary ammonium salt of dimethyl, hydrogenated tallow, 2-ethylhexyl with methyl sulfate as a counter ion.

Although the flexural modulus of composites containing polycarbonate and nanoclay is appreciably greater than that of the neat resin, a noticeable degradation, expressed in terms of the marked increase in melt flow rate and resultant decline of the impact properties, was noted to result upon extrusion compounding and molding.

Adding a carboxylic acid in small amount to polycarbonate/nanoclay composites was found to stabilize the composition. The carboxylic acid suitable in the present context includes both aliphatic and aromatic acids. Fatty acids, both saturated and unsaturated are included within the suitable acids. Preferably, the carboxylic acid is aliphatic and most preferably it contains 2 to 6 carbon atoms. Citric acid is advantageously used.

The acid is used in the practice of the invention in an amount of 1 to 20, preferably 5 to 15, more preferably 8 to 12 percent relative to the weight of the nanoclay.

The invention is further illustrated but is not intended to be limited by the following examples in which all parts and percentages are by weight unless otherwise specified.

### EXAMPLES

Compositions in accordance with the present invention were prepared and their properties evaluated. The polycarbonate that was used in these compositions was Makrolon 3208 polycarbonate resin (a bisphenol-A based homopolycarbonate having a melt flow rate (MFR) of about 5.1 g/10 min. per ASTM D 1238 at a loading of 1.2kG at 300°C), a product of Bayer Polymers LLC. The nanoclays designated in Tables 1 and 2 as "nanoclay 1 and 2" are, respectively, Cloistite 20A and 25A obtained commercially from Southern Clay Products. The citric acid that was used in the course of the experiments was chemically pure grade. The multi-axial impact strength was determined using an Instron instrumented impact tester with 3 in. stage and 0.5 in. tup at a dart speed of 15 mph. The thickness of all the aforementioned test specimens was 1/8".

The preparation of these compositions and their testing were conventional; the properties are tabulated in Tables 1 and 2.

**Table 1**

| | 1 | 2 | 3 | 4 | 5 |
|---|---|---|---|---|---|
| Polycarbonate, wt.% | 100 | 97.5 | 95 | 97.5 | 95 |
| Nanoclay 1, wt.% | 0 | 2.5 | 5 | 0 | 0. |
| Nanoclay 2, wt.% | 0 | 0 | 0. | 2.5 | 5 |
| | | | | | |
| MFR (gm/10min.) | 5.1 | 54.8 | 57.5 | 36.9 | 55.7 |
| Flexural Modulus (psi x 10⁻⁵) | 3.62 | 4.07 | 4.42 | 3.99 | 4.54 |
| Notched Izod Impact Strength (ft-lb/in) | 15.5 | 1 | 0.6 | 1.5 | 0.5 |
| Unnotched Izod Impact Strength (ft-lb) | N' | 57.1 | 13.5 | 64.1 | 13.4 |
| Multiaxial Impact Strength (ft-lb) | 60.6 | 27.6 | 2.3 | 39.7 | 2 |
| Fracture Mode² | D | S | B | S | B |

| | | | | | |
|---|---|---|---|---|---|
| ¹- N denotes no break. ²- D - ductile; S - shatter, B - brittle. | | | | | |

Examples 1-5 are comparative. The results show that the incorporation of nanoclay in polycarbonate resin resulted in the degradation of the impact properties.

**Table 2**

| | 6 | 7 | 8 | 9 |
|---|---|---|---|---|
| Polycarbonate, wt.% | 97.25 | 94.5 | 97.25 | 94.5 |
| Nanoclay 1, wt.% | 2.5 | 5 | 0 | 0 |
| Nanoclay 2, wt.% | 0 | 0 | 2.5 | 5 |
| Citric acid, wt.% | 0.25 | 0.5 | 0.25 | 0.5 |
| MFR (gm/10min.) | 11.3 | 11.2 | 9.2 | 9 |
| Flexural Modulus | 4.0 | 4.6 | 4.2 | 4.6 |
| (psix 10⁻⁵) | | | | |
| Notched Izod | 3 | 2 | 1.7 | 1.3 |
| Impact Strength (ft-lb/in) | | | | |
| Unnotched Izod | N³ | N | N | N |
| Impact Strength (ft-lb) | | | | |
| Multiaxial Impact Strength (ft-lb) | 46.1 | 40.7 | 49 | 40.6 |
| Fracture Mode | D⁴ | D* | D | D |

| | | | | |
|---|---|---|---|---|
| ³ - N denotes no break ⁴- D denotes ductile. * out of the three samples tested one failed in ductile and two failed in brittle mode. | | | | |

The results shown in Table 2 point to that the addition of citric acid to polycarbonate/clay nanocomposites imparts greater thermal stability, and improved impact properties.

## Claims

1. A thermoplastic molding composition comprising a polycarbonate resin, nanoclay in an amount of 0.1 to 20 percent relative to the weight of the polycarbonate and 1 to 20 percent relative to the weight of the nanoclay of a carboxylic acid, said nanoclay having an average platelet thickness ranging from 1 to 100 nm, and an average length and average width each independently one of the other ranging from 50 nm to 700 nm, wherein said nanoclay is natural montmorillonite modified with a quaternary phosphonium salt, or quaternary ammonium salt based on at least one member selected from the group consisting of dimethyl, dihydrogenated tallow with a chloride as a counter anion and dimethyl, hydrogenated tallow, 2-ethylhexyl with methyl sulfate as a counter ion.

2. The thermoplastic molding composition of Claim 1, wherein the amount of the nanoclay is 0.1 to 15 percent.

3. The thermoplastic molding composition of Claim 1, wherein the carboxylic acid is aliphatic.

4. The thermoplastic molding composition of Claim 1, wherein the carboxylic acid is citric acid.

5. The thermoplastic molding composition of Claim 1, wherein the amount of a carboxylic acid is 5 to 15 percent relative to the weight of the nanoclay.

6. The thermoplastic molding composition of Claim 1, wherein the amount of a carboxylic acid is 8 to 12 percent relative to the weight of the nanoclay.

7. A method to increase the impact strength of a thermoplastic molding composition that contains polycarbonate resin and 0.1 to 20 percent nanoclay, the percent being relative to the weight of the polycarbonate comprising mixing with said composition 1 to 20 percent relative to the weight of the nanoclay at least one carboxylic acid, said nanoclay **characterized in** having an average platelet thickness ranging from 1 to 100 nm, and an average length and average width each independently one of the other ranging from 50 nm to 700 nm.

## Patentansprüche

1. Thermoplastische Formungszusammensetzung, umfassend ein Polycarbonatharz, Nanoton in einer Menge von 0,1 bis 20 %, bezogen auf das Gewicht des Polycarbonats, und 1 bis 20 %, bezogen auf das Gewicht des Nanotons, Carbonsäure, wobei der genannte Nanoton eine Durchschnittsplättchendicke von 1 bis 100 nm und eine Durchschnittslänge und Durchschnittsbreite, jeweils unabhängig voneinander, von 50 bis 700 nm aufweist, worin der genannte Nanoton natürlicher Montmorillonit ist, modifiziert mit einem quartären Phosphoniumsalz oder einem quartären Ammoniumsalz auf Basis mindestens eines Mitglieds, ausgewählt aus der Gruppe, bestehend aus Dimethyl, dihydriertem Talg mit einem Chlorid als Gegenion und aus Dimethyl, hydriertem Talg, 2-Ethylhexyl mit Methylsulfat als Gegenion.

2. Thermoplastische Formungszusammensetzung gemäß Anspruch 1, worin die Menge des Nanotons 0,1 bis 15 % beträgt.

3. Thermoplastische Formungszusammensetzung gemäß Anspruch 1, worin die Carbonsäure aliphatisch ist.

4. Thermoplastische Formungszusammensetzung gemäß Anspruch 1, worin die Carbonsäure Zitronensäure ist.

5. Thermoplastische Formungszusammensetzung gemäß Anspruch 1, worin die Menge der Carbonsäure 5 bis 15 % beträgt, bezogen auf das Gewicht des Nanotons.

6. Thermoplastische Formungszusammensetzung gemäß Anspruch 1, worin die Menge der Carbonsäure 8 bis 12 % beträgt, bezogen auf das Gewicht des Nanotons.

7. Verfahren zur Steigerung der Kerbschlagzähigkeit einer thermoplastischen Formungszusammensetzung, die Polycarbonatharz und 0,1 bis 20 % Nanoton enthält, wobei die Prozente auf das Gewicht des Polycarbonats bezogen sind, umfassend die Vermischung mit der genannten Zusammensetzung von 1 bis 20 %, bezogen auf das Gewicht des Nanotons, mindestens einer Carbonsäure, wobei der genannte Nanoton **dadurch gekennzeichnet ist, dass** er eine Durchschnittsplättchendicke von 1 bis 100 nm und eine Durchschnittslänge und Durchschnittsbreite, jeweils unabhängig voneinander, von 50 bis 700 nm aufweist.

## Revendications

1. Composition moulable thermoplastique comprenant une résine de polycarbonate, une nano-argile en une quantité allant de 0,1 à 20% ramenée au poids du polycarbonate, et un acide carboxylique en une quantité allant de 1 à 20% ramenée au poids de la nano-argile, ladite nano-argile ayant une épaisseur de paillette moyenne de 1 à 100 nm et une longueur moyenne et une largeur moyenne allant chacune indépendamment l'une de l'autre de 50 nm à 700 nm, ladite nano-argile étant de la montmorillonite naturelle modifiée avec un sel de phosphonium quaternaire ou un sel d'ammonium quaternaire a base d'au moins un élément choisi dans le groupe constitué par un diméthyl(alkyle de suif) dihydrogéné avec un chlorure comme contre-anion et un diméthyl(alkyle de suif)-2-éthylhexyle hydrogéné avec un méthylsulfate comme contre-ion.

2. Composition moulable thermoplastique selon la revendication 1, dans laquelle la quantité de nano-argile se situe dans la plage de 0,1 à 15%.

3. Composition moulable thermoplastique selon la revendication 1, dans laquelle l'acide carboxylique est aliphatique.

4. Composition moulable thermoplastique selon la revendication 1, dans laquelle l'acide carboxylique est l'acide citrique.

5. Composition moulable thermoplastique selon la revendication 1, dans laquelle la quantité d'acide carboxylique se situe dans la plage de 5 à 15%, ramenée au poids de la nano-argile.

6. Composition moulable thermoplastique selon la revendication 1, dans laquelle la quantité d'acide carboxylique se situe dans la plage de 8 à 12%, ramenée au poids de la nano-argile.

7. Procédé d'augmentation de la tenue au choc d'une composition moulable thermoplastique qui contient une résine de polycarbonate et de 0,1 à 20% de nano-argile, le pourcentage étant ramené au poids du polycarbonate, lequel procédé comprend le mélange d'au moins un acide carboxylique avec ladite composition en une quantité de 1 à 20%, ramené au poids de la nano-argile, ladite nano-argile étant **caractérisée par** une épaisseur de paillette moyenne de 1 à 100 nm et par une longueur moyenne et une largeur moyenne allant chacune indépendamment l'une de l'autre de 50 nm à 700 nm.
